# DEMANDE DE BREVET EUROPEEN

(11) **EP 3 315 737 A1**
(43) Date de publication de la demande: **02.05.2018**
(21) Numéro de dépôt: 17191010.2
(22) Date de dépôt: 14.09.2017
(51) Int. Cl.: F01M 1/16, F01M 11/06, F01M 11/00

(54) **DISPOSITIF DE LUBRIFICATION POUR MOTEUR COMPRENANT UN RESERVOIR AUXILIAIRE**

(30) Priorité: 27.10.2016 FR 1660453
(71) Demandeur: RENAULT s.a.s., 92100 Boulogne-Billancourt (FR)
(72) Inventeur: MILLON, Jean-Pierre, 78870 BAILLY (FR); TESSIER, Ludovic, 93370 MONTFERMEIL (FR)

(57) **Abrégé**

Dispositif de lubrification pour un moteur comprenant un carter d'huile (1), un réservoir auxiliaire (2), un circuit d'huile haute pression (101) destiné à lubrifier des organes moteurs (3), caractérisé en ce que le circuit d'huile haute pression (101) comprend une dérivation (107) en aval de laquelle une première branche haute pression (109) alimente au moins un organe moteur à lubrifier et une deuxième branche haute pression (110) débouche dans le réservoir auxiliaire (2).

## Description

La présente invention concerne un dispositif de lubrification pour moteur.

L'invention concerne aussi un moteur comprenant un tel dispositif de lubrification.

L'invention concerne également un véhicule automobile comprenant un tel moteur ou un tel dispositif de lubrification.

L'invention concerne également un procédé d'assemblage d'un moteur équipé d'un tel dispositif de lubrification ou un procédé de fabrication d'un tel dispositif de lubrification.

L'huile de lubrification permet de réduire les frottements internes d'un moteur. L'huile de lubrification doit être régulièrement renouvelée pour garantir des propriétés de lubrification suffisantes. Une solution pour augmenter la durée de vie de l'huile consiste à augmenter le volume d'huile disponible. L'augmentation du volume d'huile dans le carter d'huile crée un risque de surpression de l'huile pouvant causer la casse du moteur. On connait l'utilisation de moteurs dits à « carter sec » comprenant un deuxième réservoir d'huile annexe. L'huile redescendant dans le carter d'huile est pompée dans le réservoir annexe par une première pompe. Une deuxième pompe permet d'alimenter en huile les organes du moteur destinés à être lubrifiés depuis le réservoir annexe. Un tel système est couteux et volumineux puisqu'il requiert l'usage de deux pompes.

On connait également du document FR2941010 un dispositif comprenant un deuxième réservoir situé dans la partie inférieure du carter du bloc moteur à proximité du carter d'huile et recueillant une partie de l'huile de recyclage du moteur. Ce dispositif présente l'inconvénient de devoir intégrer un deuxième réservoir en contrebas des organes moteurs et à proximité du carter d'huile. Le constructeur du moteur a peu de flexibilité pour positionner le deuxième réservoir.

Le but de l'invention est de fournir un dispositif de lubrification pour moteur remédiant aux inconvénients ci-dessus et améliorant les dispositifs de lubrification connus de l'art antérieur.

En particulier, l'invention a pour objet de réaliser un dispositif de lubrification permettant d'augmenter le volume d'huile en circulation et offrant une grande flexibilité pour son intégration sur un moteur.

L'invention se rapporte à un dispositif de lubrification pour un moteur comprenant un carter d'huile, un réservoir auxiliaire, un circuit d'huile haute pression destiné à lubrifier des organes moteurs, le circuit d'huile haute pression comprenant une dérivation en aval de laquelle une première branche haute pression alimente au moins un organe moteur à lubrifier et une deuxième branche haute pression débouche dans le réservoir auxiliaire.

Le dispositif de lubrification peut comprendre une conduite de raccordement entre le réservoir auxiliaire et le carter d'huile ou entre le réservoir auxiliaire et une dérivation d'une conduite d'alimentation d'une pompe à huile.

Le réservoir auxiliaire peut comprendre un ajutage d'entrée connecté au circuit d'huile haute pression et un ajutage de sortie connecté à la conduite de raccordement, la section de l'ajutage d'entrée étant plus grande que la section de l'ajutage de sortie.

Le réservoir auxiliaire peut comprendre en amont de l'ajutage d'entrée, une électrovanne d'entrée ou un clapet d'entrée, notamment un clapet d'entrée passant si la pression d'huile en amont du clapet d'entrée est supérieure à un seuil de pression.

Le réservoir auxiliaire peut comprendre en aval de l'ajutage de sortie une électrovanne de sortie ou une vanne thermostatique, notamment une vanne thermostatique fermée si la température de de l'huile est inférieure à un seuil de température.

Le réservoir auxiliaire peut comprendre une électrovanne d'entrée naturellement passante et une électrovanne de sortie naturellement non passante.

Le réservoir auxiliaire peut comprendre un évent connecté au carter d'huile par une conduite d'aération, cet évent pouvant être un ajutage de section inférieure à 0,05 mm ou un clapet fermé si la pression à l'intérieur du réservoir auxiliaire est supérieure ou égale à la pression dans la conduite d'aération augmentée de 0,1 Bar et ouvert dans le cas contraire.

Le dispositif de lubrification peut comprendre un capteur de niveau d'huile dans le carter d'huile et/ou un capteur de température d'huile dans le carter d'huile ou le circuit d'huile haute pression et/ou un capteur de pression d'huile dans le circuit haute pression.

La présente invention se rapporte également à un moteur lubrifié par de l'huile comprenant un dispositif de lubrification tel que défini précédemment.

La présente invention se rapporte également à un véhicule automobile comprenant un dispositif de lubrification tel que défini précédemment.

Enfin, l'invention concerne un procédé de fabrication d'un dispositif de lubrification, le procédé comprenant au moins l'une des étapes suivantes :
a. Assemblage d'un carter d'huile du dispositif de lubrification à un moteur ;
b. Assemblage d'un réservoir auxiliaire du dispositif de lubrification à un moteur ;
c. Connexion hydraulique du réservoir auxiliaire à un circuit d'huile haute pression du dispositif de lubrification.

Le dessin annexé représente, à titre d'exemple, un mode de réalisation d'un dispositif de lubrification pour moteur selon l'invention.
La figure 1 est une vue schématique partielle d'un moteur équipé d'un dispositif de lubrification selon un premier mode de réalisation de l'invention.
La figure 2 est une vue schématique partielle d'un moteur équipé d'un dispositif de lubrification selon un deuxième mode de réalisation de l'invention.
La figure 3 est une vue schématique d'un mode de réalisation d'un réservoir auxiliaire selon un mode de réalisation de l'invention.
La figure 4 est une vue tridimensionnelle d'un moteur équipé d'un dispositif de lubrification selon un mode de réalisation de l'invention.

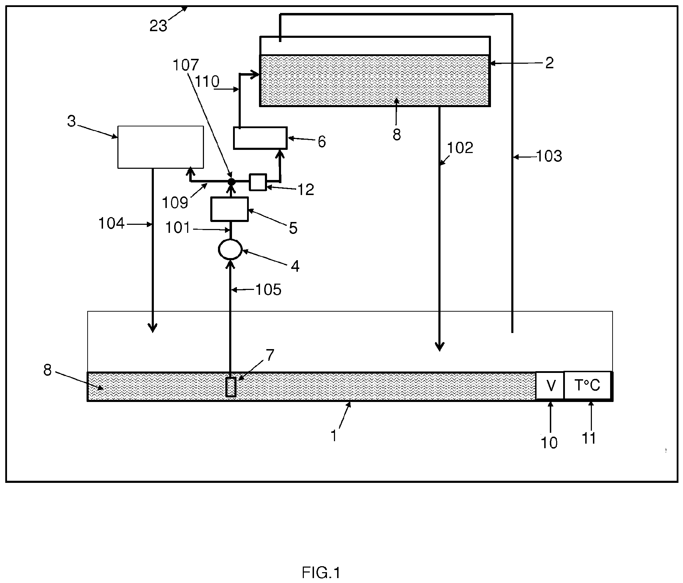

La figure 1 représente à titre d'exemple, un moteur 23 équipé d'un mode de réalisation d'un dispositif de lubrification selon l'invention. Le dispositif de lubrification selon l'invention peut être utilisé pour toutes les applications de moteurs équipés d'un système de lubrification sous pression. En particulier, le dispositif de lubrification peut être utilisé pour des moteurs à combustion de véhicules automobiles, des moteurs de bateaux, des moteurs de motos ou encore des moteurs de générateurs. Selon le mode de réalisation présenté sur la figure 1, le moteur 23 équipé du dispositif de lubrification selon l'invention est un moteur à combustion pour véhicule automobile.

Le dispositif de lubrification comprend un carter d'huile 1, un réservoir auxiliaire 2 et un circuit d'huile haute pression 101 destiné à lubrifier des organes moteurs 3. Le réservoir auxiliaire 2 est distinct du carter d'huile 1. Le carter d'huile 1 est disposé dans la partie inférieure du moteur 23. Le carter d'huile 1 recueille l'huile 8 descendant dans le moteur par gravité au travers de conduites de recyclage 104. Une pompe à huile 4 aspire l'huile présente dans le carter d'huile 1 au travers d'une conduite d'alimentation 105 plongée dans le carter d'huile 1. La conduite d'alimentation 105 est connectée à la pompe à huile 4 à son extrémité supérieure et à une crépine 7 immergée dans l'huile présente dans le carter d'huile 1 à son extrémité inférieure.

Le dispositif de lubrification comprend un circuit d'huile haute pression 101. L'huile est mise sous pression dans le circuit d'huile haute pression 101 par la pompe à huile 4. En fonction des conditions de fonctionnement du moteur 23, la pression relative dans le circuit haute pression 101 peut varier entre 0,2 et 25 Bar. Le circuit d'huile haute pression 101 alimente les organes moteurs 3 destinés à être lubrifiés et le réservoir auxiliaire 2.

Dans le cas d'un moteur à combustion, les organes moteurs 3 destinés à être lubrifiés peuvent être notamment le vilebrequin, les bielles, les pistons ou les arbres à cames. Le circuit d'huile haute pression 101 comprend une dérivation 107. La pompe à huile 4 est en amont de la dérivation 107. Le circuit d'huile haute pression 101 se divise en deux branches en aval de la dérivation 107. La première branche 109 dessert les différents organes du moteur 3 destinés à être lubrifiés. La deuxième branche 110 dessert le réservoir auxiliaire 2.

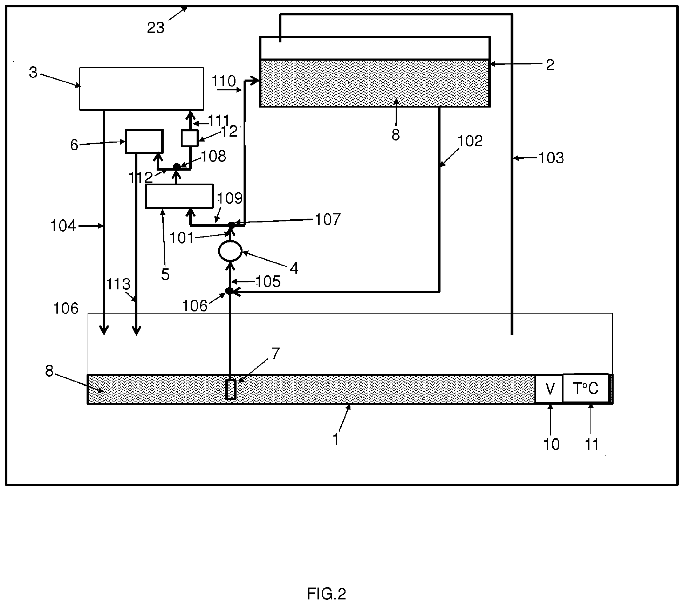

Selon le mode de réalisation présenté en figure 1, une conduite de raccordement 102 connecte le réservoir auxiliaire 2 au carter d'huile 1. La conduite de raccordement 102 comprend une première embouchure à l'intérieur du réservoir auxiliaire 2 et une deuxième embouchure à l'intérieur du carter d'huile 1. La hauteur de la première embouchure est supérieure à la hauteur de la deuxième embouchure de manière a ce que l'huile contenue dans le réservoir auxiliaire 2 coule par gravité vers le carter d'huile 1. La première embouchure est positionnée au point le plus bas du réservoir auxiliaire 2 de manière à ce que la totalité de l'huile contenue dans le réservoir auxiliaire 2 puisse s'écouler par gravité à travers la première embouchure. Selon le mode de réalisation présenté en figure 2, la conduite de raccordement 102 connecte le réservoir auxiliaire 2 à une dérivation 106 de la conduite d'alimentation 105 de la pompe à huile 4.

Le dispositif de lubrification comprend de plus un filtre à huile principal 5 monté sur le circuit d'huile haute pression 101 soit en amont du réservoir auxiliaire 2, soit en parallèle du réservoir auxiliaire 2. Selon le mode de réalisation illustré sur la figure 1, le filtre à huile principal 5 est disposé en amont du réservoir auxiliaire 1 et de la dérivation 107 et directement en aval de la pompe à huile 4. Selon le mode de réalisation illustré sur la figure 2, le filtre à huile principal 5 est disposé en parallèle du réservoir auxiliaire 2, sur la première branche 109 du circuit haute pression 101 en aval de la dérivation 107 et en amont des organes moteur 3.

Le dispositif de lubrification comprend un filtre à huile secondaire 6 monté sur le circuit d'huile haute pression 101 en aval du filtre à huile principal 5. Le filtre à huile secondaire 6 peut être un filtre à huile dont les mailles sont plus fines que celles du filtre à huile principal 5. Selon le mode de réalisation illustré sur la figure 1, le filtre à huile secondaire 6 est disposé en aval de la dérivation 107, sur la deuxième branche 110 du circuit d'huile haute pression 101 et en amont du réservoir auxiliaire 2.

Selon le mode de réalisation illustré sur la figure 2, le filtre à huile secondaire 6 est disposé en aval d'une deuxième dérivation 108 du circuit d'huile haute pression disposée sur la première branche 109 en aval du filtre à huile principal 5. En aval de la deuxième dérivation 108 du circuit d'huile haute pression 101, une troisième branche 111 alimente les organes moteur 3 et une quatrième branche 112 alimente le filtre à huile secondaire 6. En sortie du filtre à huile secondaire 6, l'huile est guidée vers la carter d'huile 1 par une conduite de recyclage secondaire 113.

Le carter d'huile 1 comprend un capteur de niveau d'huile 10 et un capteur de température d'huile 11. Le capteur de niveau d'huile 10 permet de reconstituer le volume d'huile présent dans le carter d'huile 1 en intégrant le profil du carter d'huile 1. Le circuit d'huile haute pression 101 comprend un capteur de pression d'huile 12. Ces capteurs peuvent être couplés à un calculateur moteur en vue de piloter une électrovanne d'entrée 15 et/ou une électrovanne de sortie 16 du réservoir auxiliaire 2.

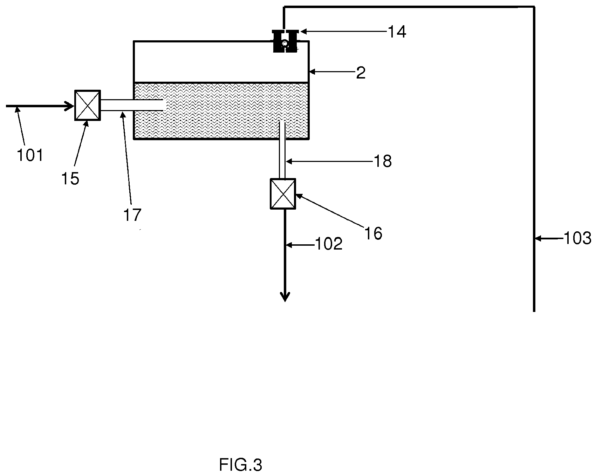

Le réservoir auxiliaire 2, plus particulièrement illustré par la figure 3, comprend un ajutage d'entrée 17 connecté au circuit d'huile haute pression 101. L'huile sous pression entre dans le réservoir auxiliaire 2 en passant à travers l'ajutage d'entrée 17. Le débit d'huile à l'entrée du réservoir auxiliaire 2 dépend principalement de la différence entre la pression d'huile dans le circuit haute pression 101 et la pression d'huile dans le réservoir auxiliaire 2, de la section de l'ajutage d'entrée 17 et de la longueur de l'ajutage d'entrée 17. Le réservoir auxiliaire 2 comprend un ajutage de sortie 18 connecté à la conduite de raccordement 102. L'huile contenue dans le réservoir auxiliaire 2 sort du réservoir auxiliaire 2 en passant à travers l'ajutage de sortie 18. Le débit d'huile à la sortie du réservoir auxiliaire 2 dépend principalement de la différence entre la pression d'huile dans le réservoir auxiliaire 2 et la pression d'huile dans la conduite de raccordement 102, de la section de l'ajutage de sortie 18 et de la longueur de l'ajutage de sortie 18. La perte de charge de l'ajutage d'entrée 17 est inférieure à la perte de charge de l'ajutage de sortie 18. Par exemple, la section de l'ajutage d'entrée 17 est plus grande que la section de l'ajutage de sortie 18 et la longueur de l'ajutage d'entrée 17 est sensiblement égale à la longueur de l'ajutage de sortie 18. Ainsi même si la pression d'huile dans le circuit haute pression 101 n'est que légèrement supérieure à la pression d'huile dans la conduite de raccordement 102, le réservoir auxiliaire 2 se remplit.

Le réservoir auxiliaire 2 peut comprendre en amont de l'ajutage d'entrée 17, une électrovanne d'entrée 15 ou un clapet d'entrée. L'électrovanne d'entrée 15 permet de réguler l'entrée d'huile dans le réservoir auxiliaire 2. L'électrovanne d'entrée 15 est pilotée par un calculateur du véhicule, notamment par le calculateur du moteur. Afin de simplifier la réalisation du réservoir auxiliaire 2, un clapet d'entrée peut être utilisé en lieu et place de l'électrovanne d'entrée 15. Le clapet d'entrée est passant si la pression relative d'huile en amont du clapet est supérieure à un seuil de pression défini en fonction du réglage désiré, par exemple 0,1 Bar.

Le réservoir auxiliaire 2 peut comprendre en aval de l'ajutage de sortie 18, une électrovanne de sortie 16 ou une vanne thermostatique. L'électrovanne de sortie 16 permet de réguler la sortie d'huile du réservoir auxiliaire 2. L'électrovanne de sortie 16 est pilotée par un calculateur du véhicule, notamment par le calculateur du moteur. Afin de simplifier la réalisation du réservoir auxiliaire 2, une vanne thermostatique peut être utilisée en lieu et place de l'électrovanne de sortie 16. La vanne thermostatique est fermée si la température de l'huile est inférieure à un seuil de température défini en fonction du réglage désiré, par exemple un seuil de température défini entre 0 et 120 °C.

En absence de pilotage, par exemple en cas de défaut du calculateur moteur, l'électrovanne d'entrée 15 est passante et l'électrovanne de sortie est non passante. Ainsi, par défaut, le réservoir auxiliaire 2 se remplit d'huile et le volume d'huile présent dans le carter d'huile 1 est diminué. Ainsi, le risque de surpression d'huile dans le carter d'huile 1 est limité. Une surpression dans le carter d'huile 1 peut conduire à un phénomène auto-entretenu de combustion de l'huile provoquant la casse du moteur 23.

Le réservoir auxiliaire 2 comprend un évent 14 connecté au carter d'huile 1 par une conduite d'aération 103. L'évent 14 est positionné au dessus du niveau d'huile dans le réservoir auxiliaire 2. La conduite d'aération 103 débouche dans le carter d'huile 1 au dessus du niveau d'huile. La conduite d'aération 103 constitue une conduite d'air ou de gaz entre le réservoir auxiliaire 2 et la carter d'huile 1. Ainsi la pression des gaz dans le réservoir auxiliaire 2 est sensiblement égale à la pression des gaz dans le carter d'huile 1. L'écoulement de l'huile du réservoir auxiliaire 2 vers le carter d'huile 1 par la conduite de raccordement 102 ne peut être entravé par un écart de pression des gaz entre le réservoir auxiliaire 2 et le carter d'huile 1. L'évent 14 peut être un ajutage de diamètre inférieur à 1 mm. Les gaz présents dans le réservoir auxiliaire 2 peuvent passer au travers d'un ajutage de diamètre inférieur à 0,05mm. L'évent 14 peut être un clapet fermé si la pression à l'intérieur du réservoir auxiliaire est supérieure ou égale à la pression dans la conduite d'aération augmentée de 0,1 Bar et ouvert dans le cas contraire. Par conséquent l'huile ne peut pas circuler dans la conduite d'aération 103. L'efficacité de l'électrovanne de sortie 16 ou de la vanne thermostatique n'est donc pas perturbée par la présence de la conduite d'aération 103.

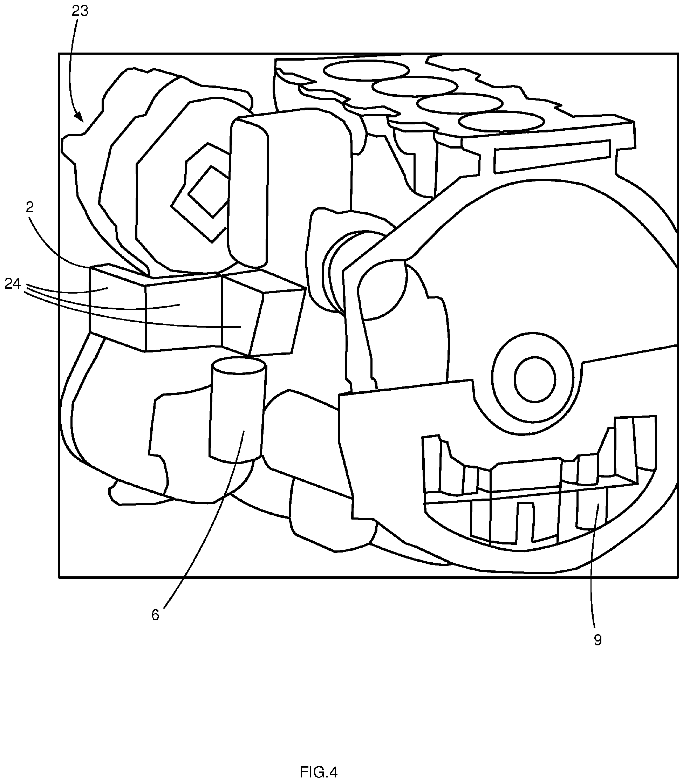

Selon l'invention, le réservoir auxiliaire 2 peut être positionné de manière flexible au niveau du moteur, notamment à l'intérieur ou à l'extérieur du carter moteur. Dans l'exemple illustré en figure 4, le réservoir auxiliaire 2 est fixé à l'extérieur du carter moteur. La forme du réservoir auxiliaire 2 peut épouser avantageusement les contours du moteur 23. Par exemple, le réservoir auxiliaire 2 peut être constitué d'un assemblage de volumes 24. Ainsi, le réservoir auxiliaire 2 peut aisément s'intégrer dans un espace libre du compartiment moteur. Le réservoir auxiliaire 2 est alimenté par de l'huile sous pression. La pression relative de l'huile à l'entrée du réservoir auxiliaire 2 peut varier entre 0,2 et 25 Bar. L'alimentation en huile haute pression facilite donc le positionnement du réservoir auxiliaire 2 dans l'environnement du moteur car il n'est pas nécessaire de tenir compte de la force de gravité sur l'huile. Notamment, il est possible de positionner le réservoir auxiliaire au dessus des organes moteur.

Selon les modes de réalisation décrits, le réservoir auxiliaire 2 est positionné sur une branche haute pression du circuit de lubrification, en amont d'une pompe à huile 4. Il est positionné en aval d'une dérivation permettant d'une part d'alimenter au moins un organe du moteur, et d'autre part de l'alimenter. En variante de réalisation, le réservoir auxiliaire 2 pourrait être disposé de manière différente sur le circuit haute pression du dispositif de lubrification. Il pourrait par exemple se trouver en aval d'au moins un organe 3 à lubrifier du moteur. Ainsi, son positionnement au sein de l'architecture du moteur est très flexible.

D'autre part, le dispositif de lubrification se divise donc en deux parties. Une première partie dite « basse pression » comprend principalement le carter d'huile 8, au moins une conduite d'alimentation 105 provenant directement du carter d'huile 8, et une ou plusieurs conduites de retour, comme des conduites de recyclage 104 et une conduite de raccordement 102. Dans ces conduites, l'huile est dirigée vers le carter d'huile, notamment sur la base de la simple gravité. Une seconde partie dite « haute pression » comprend notamment l'huile directement prête à alimenter et lubrifier les organes moteur. Cette seconde partie se trouve en aval d'une pompe à huile 4 récupérant l'huile stockée dans le carter d'huile 8, et en amont des conduites de retour susmentionnées.

Un mode d'exécution d'un procédé de montage d'un dispositif de lubrification selon un mode de réalisation de l'invention peut comprendre les étapes suivantes :
- Assemblage d'un carter d'huile 1 du dispositif de lubrification à un moteur 23 ;
- Assemblage d'un réservoir auxiliaire 2 du dispositif de lubrification à un moteur 23 ;
- Connexion hydraulique du réservoir auxiliaire 2 à un circuit d'huile haute pression 101 du dispositif de lubrification.

Plus précisément, le procédé de montage peut également comprendre les étapes suivantes :
- L'électrovanne d'entrée 15 du réservoir auxiliaire 2 est raccordée au circuit d'huile haute pression 101 ;
- L'électrovanne de sortie 16 du réservoir auxiliaire 2 est raccordée au carter d'huile 1 par une conduite de raccordement 102 ;
- Une conduite d'aération 103 reliant le réservoir auxiliaire 2 au carter d'huile 1 est assemblée ;
- Le circuit d'huile est rempli.

Lorsque le moteur 23 est allumé, la pompe à huile alimente le circuit d'huile haute pression 101. Les organes moteurs 3 sont lubrifiés et le réservoir auxiliaire 2 est rempli simultanément. L'huile contenu dans le réservoir auxiliaire 2 retourne dans le carter d'huile 1 a travers la conduite de raccordement 102. L'huile peut alors être ré-aspirée par la pompe à huile 4 au travers de la conduite d'alimentation 105.

Grâce à l'invention, les capacités de stockage d'huile du moteur sont augmentées. Le réservoir auxiliaire 2 est alimenté par un circuit d'huile haute pression 101, lui offrant ainsi de larges possibilités de positionnement autour du moteur 23.

## Revendications

1. Dispositif de lubrification pour un moteur comprenant un carter d'huile (1), un réservoir auxiliaire (2), un circuit d'huile haute pression (101) destiné à lubrifier des organes moteurs (3), **caractérisé en ce que** le circuit d'huile haute pression (101) comprend une dérivation (107) en aval de laquelle une première branche haute pression (109) alimente au moins un organe moteur à lubrifier et une deuxième branche haute pression (110) débouche dans le réservoir auxiliaire (2).

2. Dispositif de lubrification selon la revendication précédente comprenant une conduite de raccordement (102) entre le réservoir auxiliaire (2) et le carter d'huile ou entre le réservoir auxiliaire (2) et une dérivation (106) d'une conduite d'alimentation (105) d'une pompe à huile (4).

3. Dispositif de lubrification selon la revendication précédente, **caractérisé en ce que** le réservoir auxiliaire (2) comprend un ajutage d'entrée (17) connecté au circuit d'huile haute pression et un ajutage de sortie (18) connecté à la conduite de raccordement (102), la section de l'ajutage d'entrée étant plus grande que la section de l'ajutage de sortie.

4. Dispositif de lubrification selon la revendication précédente, **caractérisé en ce que** le réservoir auxiliaire (2) comprend en amont de l'ajutage d'entrée (17), une électrovanne d'entrée (15) ou un clapet d'entrée, notamment un clapet d'entrée passant si la pression d'huile en amont du clapet est supérieur à un seuil de pression.

5. Dispositif de lubrification selon les revendications 3 ou 4, **caractérisé en ce que** le réservoir auxiliaire (2) comprend en aval de l'ajutage de sortie (18) une électrovanne de sortie (16) ou une vanne thermostatique, notamment une vanne thermostatique fermée si la température de de l'huile est inférieure à un seuil de température.

6. Dispositif de lubrification selon l'une des revendications précédentes, **caractérisé en ce que** le réservoir auxiliaire (2) comprend une électrovanne d'entrée (15) naturellement passante et une électrovanne de sortie (16) naturellement non passante.

7. Dispositif de lubrification selon l'une des revendications précédentes, **caractérisé en ce que** le réservoir auxiliaire (2) comprend un évent (14) connecté au carter d'huile par une conduite d'aération (103), cet évent (14) pouvant être un ajutage de section inférieure à 0,05 mm ou un clapet fermé si la pression à l'intérieur du réservoir auxiliaire est supérieure ou égale à la pression dans la conduite d'aération augmentée de 0,1 Bar et ouvert dans le cas contraire.

8. Dispositif de lubrification selon l'une des revendications précédentes comprenant un capteur de niveau d'huile (10) dans le carter d'huile et/ou un capteur de température d'huile (11) dans le carter d'huile ou le circuit d'huile haute pression et/ou un capteur de pression d'huile (12) dans le circuit haute pression.

9. Moteur (23) lubrifié par de l'huile, **caractérisé en ce qu'**il comprend un dispositif de lubrification selon l'une des revendications précédentes.

10. Véhicule automobile, **caractérisé en ce qu'**il comprend un dispositif de lubrification selon l'une des revendications précédentes.

11. Procédé de fabrication d'un dispositif de lubrification selon l'une des revendications 1 à 8 comprenant au moins l'une des étapes suivantes :
a. Assemblage d'un carter d'huile (1) du dispositif de lubrification à un moteur ;
b. Assemblage d'un réservoir auxiliaire (2) du dispositif de lubrification à un moteur ;
c. Connexion hydraulique du réservoir auxiliaire (2) à un circuit d'huile haute pression du dispositif de lubrification.
